# EUROPÄISCHE PATENTSCHRIFT

(11) **EP 2 271 242 B1**
(45) Veröffentlichungstag und Bekanntmachung des Hinweises auf die Patenterteilung: **12.10.2011**
(21) Anmeldenummer: 08852927.6
(22) Anmeldetag: 11.12.2008
(51) Int. Cl.: A47J 43/18

(54) **VORRICHTUNG ZUM GRILLEN VON FISCHEN**
DEVICE FOR GRILLING FISH
DISPOSITIF PERMETTANT DE GRILLER DES POISSONS

(30) Priorität: 15.07.2008 DE 202008009506 U
(43) Veröffentlichungstag der Anmeldung: 12.01.2011
(73) Patentinhaber: Glas, Konrad, 82343 Possenhofen (DE)
(72) Erfinder: Glas, Konrad, 82343 Possenhofen (DE)
(74) Vertreter: Grättinger, Günter
(86) Internationale Anmeldenummer: PCT/EP2008/010504
(87) Internationale Veröffentlichungsnummer: WO 2009/065624

(56) Entgegenhaltungen:
- DE-U1- 29 607 574
- US-A- 3 483 816

## Beschreibung

Die vorliegende Erfindung betrifft eine neuartige Vorrichtung zum Grillen von Fischen.

Solche Vorrichtungen sind aus dem Stand der Technik bereits in verschiedensten Ausführungsformen bekannt.

Im einfachsten Fall kommt hierbei ein einfacher Grillspieß (z.B. aus Holz oder Metall) zum Einsatz, auf welchen der zu grillende Fisch in Längsrichtung aufgespießt wird, bevor er samt Fisch für den eigentlichen Grillvorgang in der Nähe einer geeigneten Hitzequelle einer Grillvorrichtung platziert wird.

Davon abgesehen, dass der zu grillende Fisch bereits beim Aufstecken des Fisches auf den Grillspieß häufig in nachteiliger Art deformiert wird, führt ein solcher Grillspieß nicht immer zu einem guten Grillergebnis. Auch die Platzierung des Grillspießes samt Fisch im Bereich der zu verwendenden Grillvorrichtung ist nur in einfacher Weise möglich, wenn an der Grillvorrichtung eine geeignete Halterung vorhanden ist oder wenn zusätzliche Hilfsmittel, wie z.B. in der DE 203 14 053 U1 beschrieben, Verwendung finden.

Die möglichen Orientierungen des Fisches gegenüber der Hitzequelle sind ohne eine zusätzliche Hilfsvorrichtung beschränkt. Es besteht dann nur die Möglichkeit, den üblicherweise mit einem Griff ausgestatteten Grillspieß im Einflussbereich der Hitzequelle entweder von Hand zu halten oder auf einer Ablagefläche - wie z.B. einem über einer Hitzequelle befindlichen Grillrost - abzustellen oder abzulegen.

In letzterem Fall kommt der Fisch mit seiner Außenseite in unmittelbarem Kontakt mit dem Grillrost, was nachteilig ist. Denn durch einen direkten Kontakt der Haut des Fisches mit dem beim Grillvorgang erhitzten Grillrost (oder einer sonstigen im Bereich der Hitzequelle vorhandenen Ablagefläche), kann die Haut daran festkleben und z.B. beim Wenden oder nach Abschluss des Grillvorgangs großflächig beschädigt werden. Die Beschädigung der Fischhaut ist nicht nur aus ästhetischen Gründen nachteilig. Insbesondere kann die im Fisch vorhandene Flüssigkeit durch beschädigte Hautstellen austreten, wodurch der gegrillte Fisch im Ergebnis häufig zu trocken wird.

Auch nach dem Grillvorgang kann ein Grillspieß samt daran aufgestecktem Fisch nur auf einer hygienisch sauberen Unterlage, z.B. einem Teller, abgelegt werden, da der Fisch hierbei wiederum in Kontakt mit der Unterlage kommt. Sofern der Fisch ohne den Grillspieß serviert werden soll, muss außerdem der in Längsrichtung den Fisch durchbohrende Grillspieß entfernt werden, was ebenfalls nicht immer bzw. nicht in einfacher Weise ohne (weitere) Beschädigung des gegrillten Fisches bewerkstelligt werden kann.

Vergleichbare Nachteile ergeben sich bei dem aus der DE 41 27 618 A1 bekannten Makrelen-Grillspieß.

Zur Beseitigung der vorstehend genannten Probleme wurden bereits weitere Vorrichtungen zum Grillen von Fischen vorgeschlagen. So besteht die aus der DE 79 35 610 U1 bekannten Vorrichtung zum Grillen von Fischen aus einem Tablett, auf welchem eine Haltevorrichtung in Form eines messerförmig ausgebildeten, etwa senkrecht stehenden Stegs mit einer Mehrzahl an Dorne auf seinem Grat ausgebildet ist, auf welche der Fisch aufgespießt wird. Ferner ist aus der DE 196 25 467 A1 eine Grillschale mit einem erhabenen umlaufenden Rand bekannt, in welcher eine zusätzliche, vom Rand beabstandete Erhebung als Stütze für einen darauf mit seiner von unten offenen Bauchseite aufzusetzenden Fisch ausgebildet ist.

Allerdings sind die zwei vorstehend genannten Vorrichtungen nicht geeignet gestaltet, um den Fisch auch in unterschiedlichen Orientierungen einer z.B. nur von unten einwirkenden Hitzequelle auszusetzen, wie dies im Übrigen auch bei der aus der DE 92 01 831 U1 bekannten Vorrichtung zum Grillen von Fischen der Fall ist.

Eine weitere Vorrichtung ist aus der DE 29607574U bekannt.

Ausgehend vom vorstehend erläuterten Stand der Technik ist es die Aufgabe der vorliegenden Erfindung eine Vorrichtung zum Grillen von Fischen bereit zu stellen, welche eine möglichst gutes Grillergebnis verspricht, welche möglichst vielseitig einsetzbar ist und mit welcher der zu grillende Fisch in möglichst unterschiedlichen Orientierungen einer Hitzequelle beim Grillen ausgesetzt werden kann.

Die vorstehende Aufgabe wird mit einer Vorrichtung zum Grillen von Fischen nach Anspruch 1 gelöst.

Die erfindungsgemäße Vorrichtung zum Grillen von Fischen umfasst eine käfigartige Struktur zum Ablegen der Vorrichtung auf einem Grillgerät oder auf einer sonstigen im wesentlichen ebenen Ablagefläche, wobei die Vorrichtung über ihre Länge eine Mehrzahl an Halteelementen aufweist, auf welche der zu grillende Fisch in Längsrichtung mit seiner von unten offenen Bauchseite aufspießbar ist.

Dabei ist erfindungsgemäß vorgesehen, dass jedes Halteelement in Art eines Doppelspießes mit zwei quer zur Längsrichtung beabstandeten spitzen Enden ausgebildet ist, zwischen denen das Rückgrat des aufgespießten Fisches aufgenommen wird. Jedes doppelspießartige Halteelement umfasst ferner einen unterhalb von dessen spitzen Enden verlaufenden Quersteg, dem das Rückgrat des aufgespießten Fisches aufliegt.

Und schließlich umfasst die Vorrichtung noch eine Mehrzahl an separaten Querspießen, die oberhalb des Rückgrats des auf die Halteelemente aufgespießten Fisches quer durch dessen Körper gebohrt und in dieser Lage in ihnen zugeordneten Führungsmitteln der käfigartigen Struktur gehalten werden können.

Dadurch ergibt sich gegenüber den vorbekannten Vorrichtungen eine Vielzahl an Vorteilen. Die in der erfindungsgemäßen Vorrichtung realisierte Haltevorrichtung, welche aus der Mehrzahl an doppelspießartigen Halteelementen mit Quersteg und den - mit geeigneten Führungsmitteln an der käfigartigen Struktur zusammenwirkenden - (separaten) Querspießen gebildet ist, sorgt für eine sichere Halterung des Fisches im Bereich seines besonders stabilen Rückgrates. Dabei wird das Rückgrat des Fisches im Bereich der spitzen Enden der doppelspießartigen Halteelemente zu beiden Seiten gestützt, wobei der Quersteg der sich nach oben erstreckenden Halteelemente für eine untere Abstützung des Rückgrates sorgt und beim Aufspießen des Fisches gewissermaßen einen Anschlag darstellt, so dass der Fisch in vorteilhafter Weise auch nicht zu weit auf die Halteelemente aufgespießt wird. Ferner kann durch geeignete Gestaltung der Halteelemente dafür Sorge getragen werden, dass diese während des Grillvorgangs die Bauchseite des Fisches nach unten hin offen halten, was das Grillergebnis auch von der Bauchinnenseite verbessert und zur Verkürzung der zum Grillen notwendigen Zeit beitragen kann.

Die quer durch den in der Vorrichtung bestimmungsgemäß gehaltenen Fisch verlaufenden Querspieße sichern den Fisch oberhalb seines Rückgrats, so dass der Fisch über seine Länge an einer Mehrzahl von Stellen im Bereich des Rückgrats von oben, unten, links und rechts abgestützt und somit allseits gesichert ist. Die Vorrichtung kann dadurch in beliebiger Orientierung gehalten oder positioniert werden, ohne dass der Fisch aus ihr heraus fällt. Die käfigartige Struktur, die den Fisch bevorzugt zu allen Seiten mit Abstand umrahmt und in welcher die Führungsmittel für die Querspieße ausgebildet sind, dient (insbesondere mit ihrer Unterseite) zur Ablage der Vorrichtung auf einer im wesentlichen ebenen Ablagefläche, wie z.B. dem Grillrost eines handelsüblichen Grills.

Soweit vorliegend von einer Mehrzahl an doppelspießartigen Haltelementen und separaten Querspießen gesprochen wird, so hat die Praxis gezeigt, dass eine Anzahl von wenigstens zwei, bevorzugt auch drei oder gar vier solcher Halteelemente bzw. Querspieße für eine hinreichende Sicherung des Fisches innerhalb der Vorrichtung ausreichend ist.

Da der zu grillende Fisch bei der erfindungsgemäßen Vorrichtung zunächst auf die doppelspießartigen Haltelemente mit Quersteg aufgespießt wird, ist der Fisch, bevor er mittels der separaten Querspieße durchbohrt wird, bereits im Bereich des Rückgrats ausreichend fixiert (insbesondere seitlich), so dass die Querspieße auf besonders einfache und schonende Weise durch den Fisch gesteckt werden können und auch nach dem Grillvorgang wieder leicht entfernt werden können.

Die beidseits an der käfigartigen Struktur auf verschiedenen Seiten des Fisches (bevorzugt auf gleicher Höhe) vorhandenen Führungsmittel dienen bevorzugt nicht nur der Halterung des jeweiligen Querspießes in seiner späteren, den Fisch bevorzugt in im wesentlichen horizontaler Richtung durchquerenden Lage, sondern erleichtern in vorteilhafter Weise auch bereits beim Vorgang des Durchbohrens des Fisches die lagerechte Positionierung des Querspießes hierzu. Hauptaspekt der erfindungsgemäßen Führungsmittel ist es jedoch, einen bestimmungsgemäß in der Vorrichtung gehaltenen Fisch in Zusammenwirkung mit den Querspießen nach oben hin zu sichern, d.h. zu verhindern, dass der Fisch beim Umdrehen der Vorrichtung aus derselben nach unten herausfällt. In alle anderen Richtungen ist der Fisch ja bereits durch die Halteelemente gesichert. In der einfachsten Ausführungsform der vorliegenden Erfindung könnten die Führungsmittel somit auch als Sicherungsmittel für die Querspieße bezeichnet werden. Sie können hierbei in bevorzugter Weise jedoch auch bereits für den Vorgang des Durchbohrens des Fisches in gewissem Sinne als axiale Führung für den in seiner Axialrichtung durch den Fisch hindurchzustoßenden Querspieß dienen. Letzteres ist indessen nicht zwingend.

Nach dem Grillen des Fisches werden zunächst die Querspieße der erfindungsgemäßen Vorrichtung entfernt, woraufhin der Fisch von den Halteelementen genommen werden kann, was z.B. durch einfaches Umdrehen der Vorrichtung erfolgen kann, so dass der Fisch aus der Vorrichtung z.B. auf einen bereitgestellten Teller fällt.

Die erfindungsgemäße Vorrichtung ist zwar ausdrücklich auf die Halterung von Fischen zum Grillen abgestimmt. Nichtsdestotrotz eignet sich die Vorrichtung aufgrund ihrer strukturellen Merkmale ersichtlich auch zum Grillen von anderem Grillgut, wie z.B. Fleisch (z.B. als Filet), da auch dieses entsprechend der vorstehenden Ausführungen in alle Richtungen innerhalb der Vorrichtung gesichert werden kann. Außerdem eignet sich die erfindungsgemäße Vorrichtung auch für andere Arten der Zubereitung von Fischen, also nicht nur zum Grillen. Sie kann z.B. zum Kochen des Fisches gemeinsam mit dem darin gehaltenen Fisch in einen Sud- oder Kochtopf gelegt oder gehängt werden oder zum Frittieren des Fisches in ein Frittiergerät eingehängt werden. Ferner eignet sich die Vorrichtung auch zur Zubereitung von Fischen (Garen, Grillen bzw. Braten) innerhalb eines Backrohrs bzw. Backofens oder zum Räuchern des Fisches innerhalb eines Räucherofens. Bei allen genannten Zubereitungsarten wird ein im Vergleich zur Zubereitung des Fisches unter Zuhilfenahme von vorbekannten Hilfsvorrichtungen häufig auch optisch ansprechenderes Ergebnis erzielt.

In einer ersten bevorzugten Weiterbildung der Erfindung ist vorgesehen, dass die käfigartige Struktur derart ausgebildet ist, dass die Vorrichtung in verschiedenen Orientierungen auf der Ablagefläche abgelegt werden kann, wobei der darin gehaltene Fisch ausschließlich mit den Halteelementen und den ihn durchbohrenden separaten Querspießen in Kontakt ist und keinen Kontakt zur Ablagefläche hat.

Damit wird also nicht nur dafür Sorge getragen, dass der zu grillende Fisch auf einem handelsüblichen Grill von verschiedenen Seiten gegrillt werden kann, sondern dass er in jeder dieser Orientierungen ausschließlich mit den Haltelementen und den ihn durchbohrenden Querspießen in Kontakt ist. Die käfigartige Struktur selbst bzw. die zur Ablage der käfigartigen Struktur dienenden Elemente sind also bevorzugt so weit von den Haltelementen beabstandet, dass ein in der Vorrichtung gehaltener Fisch üblicher Größe nicht in Kontakt mit den Ablageelementen kommt, wodurch keine Gefahr einer nachteiligen Beschädigung der Fischhaut während des Grillvorgangs besteht. Man kann von einem quasikontaktlosen Grillvorgang sprechen. Die durch die Querspieße verursachte Punktierung der Fischhaut ist nicht von besonderer Bedeutung und kann im Rahmen der vorliegenden Erfindung toleriert werden.

Für Fische mit stark von einem Normmaß abweichender Größe kann eine Vorrichtung mit entsprechend angepassten Abmessungen bzw. eine in ihren Abmessungen anpassbare Vorrichtung vorgesehen sein.

Es sollte durch geeignete Gestaltung der käfigartigen Struktur bevorzugt dafür Sorge getragen werden, dass die verschiedenen Orientierungen, in welcher die Vorrichtung auf der Ablagefläche abgelegt werden kann, einer Orientierung des in der Vorrichtung bestimmungsgemäß gehaltenen Fisches entsprechen, in welcher dieser mit seiner ersten Seitenflanke und/oder seiner zweiten Seitenflanke und/oder mit seiner Bauchseite und/oder mit seiner Rückenseite der Ablagefläche zugewandt ist. Vor allem die Halterung des Fisches in Rückenlage, d.h. mit der Rückenseite nach unten, erweist sich als besonders vorteilhaft, da in dieser Lage der "Saft" des Fisches während des Grill- bzw. Garvorgangs im Fisch verbleibt, wodurch ein geschmacklich hervorragendes Grillergebnis erzielbar ist.

Der zu grillende Fisch kann also, wenn die vorliegende Vorrichtung z.B. auf dem Grillrost eines handelsüblichen Kohle-, Gas- oder Elektrogrills Verwendung findet, bevorzugt sowohl von unten als auch - nacheinander - von beiden Seiten als auch von seiner rückenflossenseitigen Oberseite gegrillt werden. Insbesondere die Möglichkeit den Fisch von seiner Oberseite zu grillen erweist sich als besonders vorteilhaft, da sich dort ein großer Teil des zu grillenden Fischfleisches befindet.

Zur Halterung des Fisches auch im Bereich seines hinteren Endes ist im Rahmen einer weiteren Ausführungsform der vorliegenden Erfindung bevorzugt ein weiteres Halteelement vorgesehen, welches zur unteren und seitlichen Stützung des bestimmungsgemäß in der Vorrichtung gehaltenen Fisches im Bereich seiner Schwanzflosse bzw. im Bereich seines Schwanzstiels geeignet gestaltet ist. Dabei ist z.B. an ein quer zur Längsrichtung - von oben gesehen - konkav geformtes Halteelement zu denken, welches im Wesentlichen der Form des Schwanzstiels eines Fisches folgt. Bevorzugt kann dann mittels geeignet angeordneter Führungsmittel an der käfigartigen Struktur ein weiterer separater Querspieß im Bereich dieses Halteelements zur weiteren Sicherung des Fisches auch im Bereich seiner Schwanzflosse Verwendung finden.

Im übrigen ist im Rahmen der vorliegenden Erfindung bevorzugt dafür Sorge zu tragen, dass (auch) jedem doppelspießartigen Halteelement genau ein separater Querspieß und diesbezügliche Führungsmittel an der käfigartigen Struktur zugeordnet sind, wobei die Führungsmittel so gestaltet und angeordnet sind, dass der in der Vorrichtung bestimmungsgemäß gehaltene Fisch von dem einem Halteelement zugeordneten und in den Führungsmitteln gehaltenen Querspieß in unmittelbarer Nähe zu dem ihm zugeordneten Halteelement durchquert wird.

Mithin sind die Führungsmittel für die Querspieße bevorzugt so an der käfigartigen Struktur platziert, dass der von den Führungsmitteln gehaltene Querspieß den Fisch jeweils oberhalb des Rückgrats und in unmittelbarer Nähe zu einem doppelspießartigen Halteelement, bevorzugt knapp darüber oder knapp neben dessen spitzen Enden, durchquert. Dies erleichtert wegen der unmittelbar benachbarten Fixierung durch die Halteelemente nicht nur das Einführen und Herausziehen des Querspießes ohne dass dabei der zu grillende bzw. gegrillte Fisch beschädigt wird. Die Sicherung des Fisches in allen möglichen Richtungen erfolgt dann - im Bereich der verschiedenen Haltelemente - mehrfach über die Länge des Fisches, jedoch stets im unmittelbaren Bereich des dort angeordneten Halteelements.

Die Führungsmittel für die separaten Querspieße sind bevorzugt durch eine allseits berandete Öffnung gebildet, in welcher der jeweilige Querspieß axial geführt, d.h. insbesondere quer zur Axialrichtung, gehalten ist. Selbstverständlich kann bzw. sollte dabei ein gewisses Spiel vorhanden sein, insbesondere auch um den unterschiedlichen Abmessungen verschiedener Fische innerhalb eines Toleranzbereichs gerecht werden zu können.

Die Länge der Querspieße ist selbstverständlich bevorzugt an die Breite der käfigartigen Struktur im Bereich der Führungsmittel, d.h. an den Abstand der auf verschiedenen Seiten einander gegenüberliegenden Führungsmittel angepasst, wobei jeder Querspieß bevorzugt beidseits nur ein kleines Stück hierüber hinaussteht. Es ist ferner von Vorteil, wenn die Querspieße auf ihrer dem spitzen Ende abgewandten Endseite einen Anschlag aufweisen, so dass sie nicht zu weit durch den Fisch hindurch gesteckt werden und sich mit dem Anschlagselement an der käfigartigen Struktur bzw. den Führungsmitteln abstützen können.

Weitere bevorzugte Ausführungsvarianten der Erfindung sehen - insbesondere zur Volumensreduktion im Nichtgebrauchsfall - vor, dass die Vorrichtung stapelbar ausgestaltet ist oder dass sie eine Mehrzahl an geeignet angeordneten Gelenken aufweist, mit denen sie zusammengeklappt werden kann. Ersichtlich sollte dabei jedoch - z.B. durch einen geeigneten Rastmechanismus oder ein geeignetes Stellelement sichergestellt sein, dass sich die Vorrichtung nur bei Bedarf zusammenklappt.

Die käfigartige Struktur - wie auch die Halteelemente und die separaten Querspieße - sind bevorzugt aus einem rbstfreien Stahl hergestellt, wobei insbesondere die käfigartige Struktur auch einteilig mit den Halteelementen ausgestaltet sein kann. Es bietet sich insbesondere die gleiche Art von stabilem, hitzebeständigem und verchromtem Stahldraht an, aus welchem auch Grillroste üblicher Art hergestellt werden.

Schließlich ist im Rahmen der Erfindung bevorzugt noch vorgesehen, dass von der käfigartigen Struktur wenigstens ein längliches Element absteht, an welchem ein (bevorzugt wärmeisolierter) Griff zum Greifen der Vorrichtung oder ein Adapter zum Einsetzen der Vorrichtung in eine Drehvorrichtung befestigbar oder ausgebildet ist. Die sichere Halterung des Fisches in der erfindungsgemäßen Vorrichtung gestattet nämlich insbesondere auch deren Verwendung in einer Anordnung, bei welcher die Vorrichtung über einer waagerechten oder vor einer senkrechten Hitzequelle gehalten und um eine in Längsrichtung verlaufende Achse gedreht wird. Ein Griff oder ein sonstiger Adapter, z.B. ein Adapter zum Einhängen der Vorrichtung in einen Sud- oder Kochtopf zum Kochen des Fisches, kann in einfacher Weise auch einer Quertraverse der käfigartigen Struktur (ggfs. lösbar) befestigt sein.

Die erfindungsgemäße Vorrichtung zur Zubereitung von Fischen kann z.B. auch im Set mit einem hierzu passenden Sud- bzw. Kochtopf und/oder mit - ggfs. verschiedenen - Adaptern/Griffen angeboten werden.

Nachfolgend werden verschiedene Ausführungsbeispiele der Erfindung anhand der Zeichnung näher erläutert. Dabei zeigt:
- Fig. 1: eine perspektivische Ansicht eines Ausfüh- rungsbeispiels einer erfindungsgemäßen Vor- richtung,
- Fig. 2: eine Seitenansicht des Ausführungsbeispiels aus Fig. 1,
- Fig. 3: eine Draufsicht des Ausführungsbeispiels aus Fig. 1,
- Fig. 4: einen Schnitt durch das Ausführungsbeispiel aus Fig. 1 gemäß Schnittebene IV-IV (vgl. Fig. 3),
- Fig. 5: eine perspektivische Ansicht des Ausführungs- beispiels aus Fig. 1 mit einem darin bestim- mungsgemäß gehaltenen Fisch,
- Fig. 6: eine perspektivische Ansicht eines zweiten Ausführungsbeispiels der erfindungsgemäßen Vorrichtung,
- Fig. 7: eine perspektivische Ansicht eines dritten Ausführungsbeispiels der erfindungsgemäßen Vorrichtung und
- Fig. 8: eine perspektivische Ansicht eines vierten Ausführungsbeispiels der erfindungsgemäßen Vorrichtung.

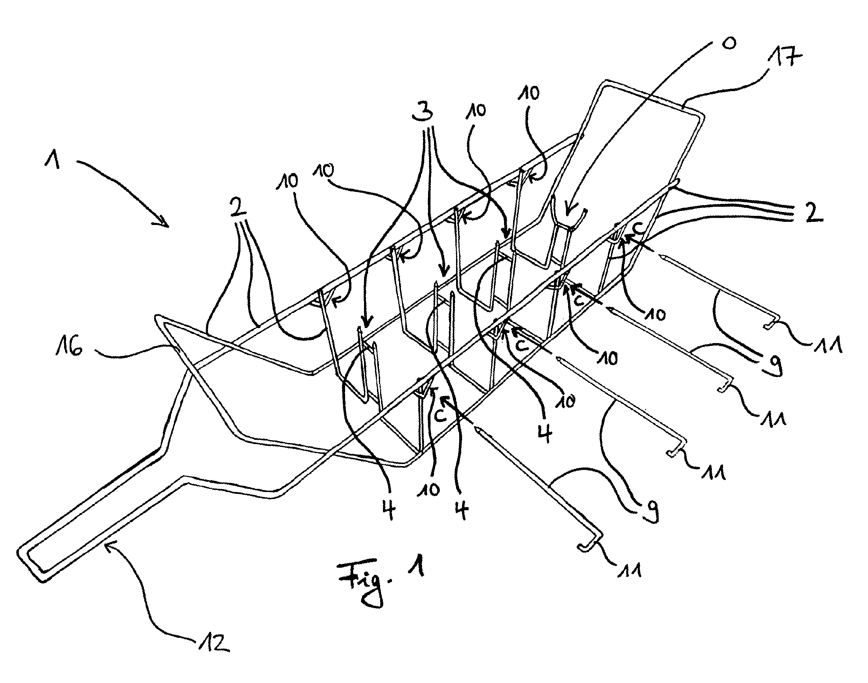

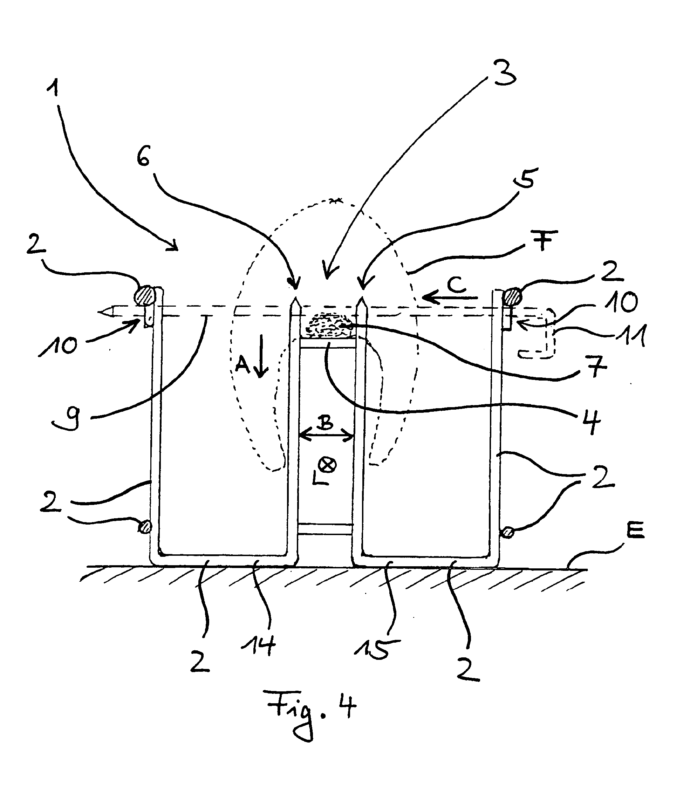

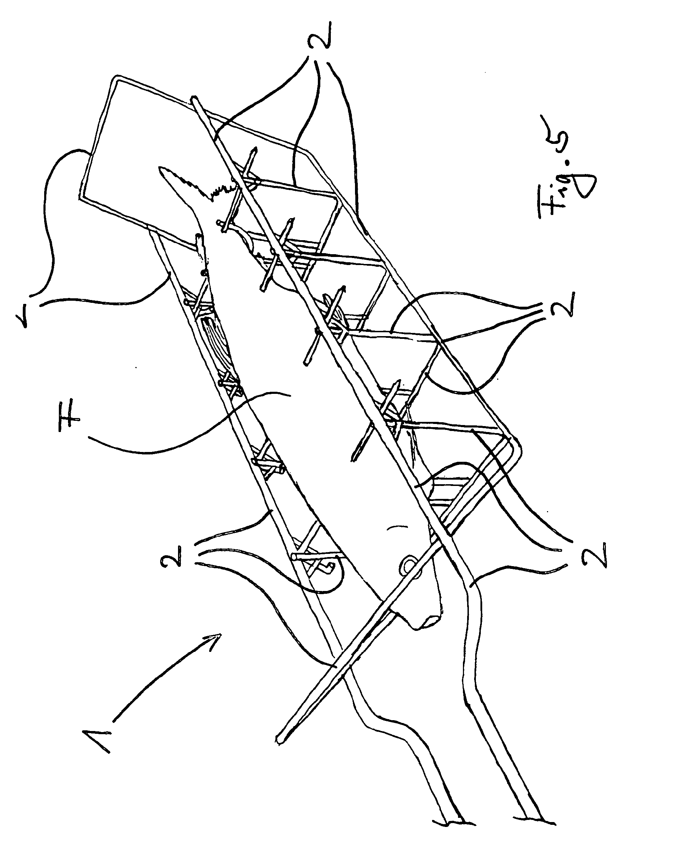

Die in den Fig. 1 bis 5 dargestellte Vorrichtung 1 zum Grillen von Fischen besteht aus einer käfigartigen Struktur 2, in welcher ein Fisch F (vgl. Fig. 4 und Fig. 5) in Längsrichtung aufgenommen und lagefest gehalten werden kann. Hierzu sind in der Vorrichtung über deren Länge eine Mehrzahl (hier: drei) an doppelspießartigen Halteelementen 3 angeordnet, deren exakter Aufbau nachfolgend anhand der Querschnittdarstellung in Fig. 4 näher erläutert ist.

Jedes der doppelspießartigen Halteelemente 3, die sich bei der vorliegend dargestellten Orientierung der Vorrichtung 1, in welcher diese mit ihrer Unterseite auf einer ebenen Auflagefläche E liegt, nach oben erstrecken, umfasst zwei spitze Enden 5, 6, auf welche der (zuvor in üblicher Weise ausgenommene) Fisch F mit seiner von unten offenen Bauchseite (vgl. Fig. 4) in Richtung des Pfeils A aufgespießt wird. Die beiden spitzen Enden 5, 6 der Halteelemente 3 sind senkrecht zur Längsrichtung L der Vorrichtung 1 um einen Abstand B beabstandet, so dass das Rückgrat 7 des auf die doppelspießartigen Halteelemente 3 von oben gemäß Pfeil A aufgespießten Fisches F zwischen deren spitzen Enden 5, 6 aufgenommen und somit zu beiden Seiten abgestützt ist. Unterhalb der spitzen Enden 5, 6 verläuft an jedem Halteelement 3 ein Quersteg 4, dem - bei aufgespießtem Fisch F - das Rückgrat 7 des Fisches F aufliegt. Die beiden Spieße bzw. spitzen Enden 5, 6 des Haltelements 3 sind vorliegend durch einander benachbarte und oben angespitzte Schenkel je eines U-förmigen Strukturelements 14, 15 gebildet, deren weitere Schenkel Teil der käfigartigen Struktur 2 ist, die zur Ablage der Vorrichtung dient.

In Fig. 4 ist ferner gut zu erkennen, dass die auch im Bereich der bauchseitigen Öffnung des in der Vorrichtung gehaltenen Fisches im Abstand B beabstandeten Spieße des Halteelements 3 den Fisch bauchseitig geöffnet halten.

Die Vorrichtung 1 weist ferner ein weiteres Halteelement 8 auf, welches als Ablage für den (kurz vor der Schwanzflosse eines Fisches befindlichen) Schwanzstiel des Fisches F dient.

Ferner umfasst die Vorrichtung eine Mehrzahl (hier: vier) an je genau einem Halteelement 3, 8 zugeordneten und separaten Querspießen 9, die oberhalb des Rückgrats 7 eines bestimmungsgemäß in der Vorrichtung 1 gehaltenen Fisches F gemäß Pfeil C quer durch dessen Körper gebohrt werden und in dieser Lage (vgl. Fig. 4, wo der Querspieß 9 lediglich gestrichelt dargestellt ist, da er sich knapp außerhalb der Zeichenebene befindet) in ihnen zugeordneten Führungsmitteln 10 gehalten werden.

Mit jedem Querspieß 9 wirken also je zwei, auf einander gegenüberliegenden Seiten der käfigartigen Struktur 2 auf gleicher Höhe befindliche Führungsmittel 10 zu dessen lagerechter Halterung innerhalb der Vorrichtung 1 zusammen. Die Querspieße 9 werden hierzu - nachdem der Fisch F auf die Halteelemente 3, 8 aufgespießt bzw. aufgesetzt wurde - jeweils zunächst durch ein erstes Führungsmittel 10 hindurch gesteckt. Dieses dient gewissermaßen als Positionierhilfe für den Querspieß 9. Anschließend wird der Querspieß 9 in axialer Richtung gemäß Pfeil C und im wesentlichen horizontal ausgerichtet durch den Fisch F gebohrt und anschließend auf der gegenüberliegenden Seite in das dortige Führungsmittel 10 eingeführt, so dass der solchermaßen positionierte Querspieß 9 beidseits des Fisches F innerhalb der Führungsmittel 10 gehalten ist, wodurch der Fisch F nicht mehr nach oben aus der Vorrichtung 1 entnehmbar ist.

Die Führungsmittel 10 sind als Öffnung in der käfigartigen Struktur 2 ausgebildet, die jeweils durch ein horizontal verlaufendes Strukturelement, durch ein vertikal verlaufendes Strukturelement und eine Schrägtraverse der käfigartigen Struktur 2 berandet ist und insoweit eine Axialführung mit gewissem Spiel für einen Querspieß 9 darstellen. Auch nur die vertikale Richtung berücksichtigende Führungsmittel, z.B. in Form zweier horizontal verlaufender und vertikal beabstandeter Strukturelemente, zwischen denen die Querspieße hindurchgesteckt werden, kämen prinzipiell als Führungsmittel im Rahmen der vorliegenden Erfindung in Frage.

Ein Anschlag 11 am hinteren Ende jedes Querspießes 9 verhindert, dass der Querspieß 9 weiter als nötig durch den Fisch F gebohrt wird.

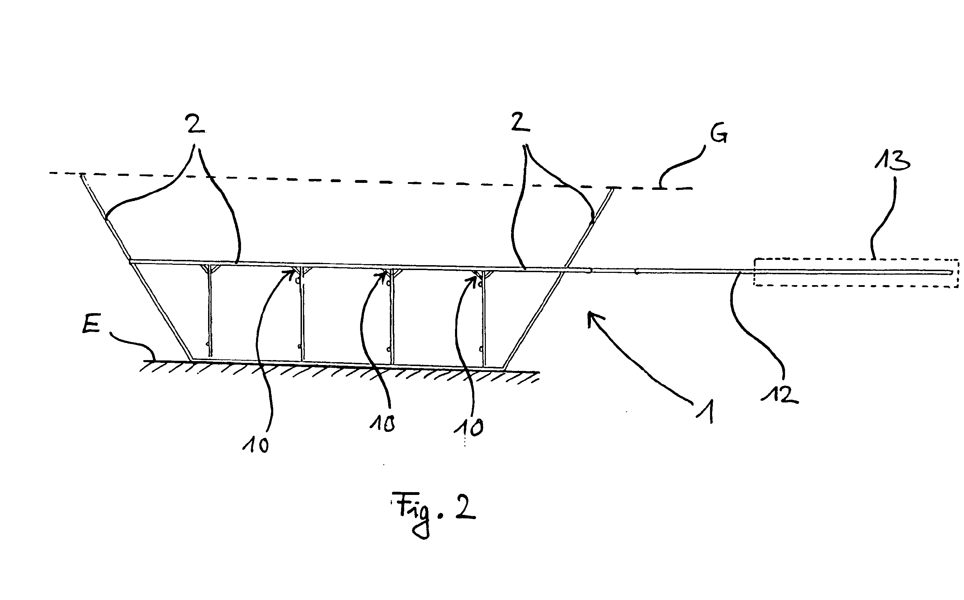

Die dargestellte Vorrichtung 1, welche vollständig (inkl. der Halteelemente 3) aus einem nicht rostenden Stahldraht gefertigt ist, weist ferner ein in Längsrichtung L von der käfigartigen Struktur 2 abstehendes bzw. einteilig mit diesem geformtes längliches Element 12 auf, welches als Griff dient bzw. auf welches ein separates Griffteil 13 (z.B. aus Holz oder Kunststoff) oder ein Adapter für eine Drehvorrichtung aufgesteckt werden kann, wie dies in Fig. 2 gestrichelt angedeutet ist.

Der Seitenansicht aus Fig. 2 kann ferner entnommen werden, dass die käfigartige Struktur 2 derart bemessen und gestaltet ist, dass die Vorrichtung 1 nicht nur mit ihrer Unterseite auf der ebenen Fläche E abgelegt werden kann, sondern dass sie - wenn man sie umdreht - auch andersherum abgelegt werden kann, wie dies durch die gestrichelt angedeutete Ebene G verdeutlicht ist. In dieser Orientierung liegen die beiden obersten Querstreben 16, 17 (vgl. Fig. 1) der Ablagefläche G (z.B. einem Grillrost) auf.

Diese beider Querstreben 16, 17 sind durch geeignet schräg verlaufende Strukturelemente der käfigartigen Struktur 2 in Längsrichtung beidseits der Vorrichtung 1 nach außen versetzt, so dass der Fisch F möglichst einfach in die Vorrichtung 1 eingesetzt oder aus dieser entnommen werden kann.

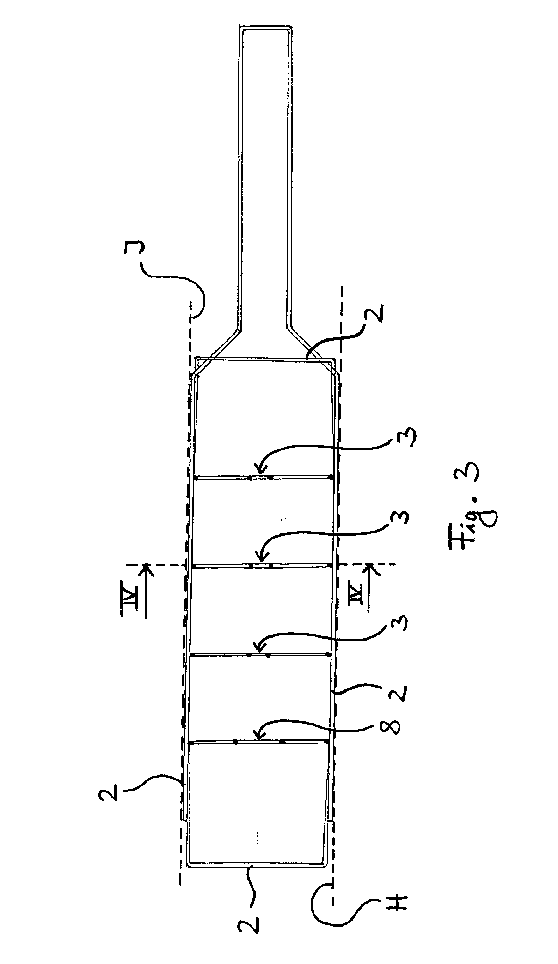

Und die Draufsicht aus Fig. 3 verdeutlicht schließlich noch durch die gestrichelt dargestellten Ebenen H und I, dass das gezeigte Ausführungsbeispiel einer erfindungsgemäßen Vorrichtung 1 auch seitlich auf einem im wesentlichen ebenen Untergrund H bzw. I (z.B. dem Grillrost eines Grills) abgelegt werden kann.

Die Vorrichtung 1 kann damit samt dem in allen Richtungen darin fest gehaltenen Fisch F in vier verschiedenen Orientierung auf dem Grillrost eines Grills positioniert werden, so dass der Fisch F wahlweise mit seiner Bauchseite, der Rückenseite oder einer der beiden Seitenflanken der Hitzeeinwirkung des Grills ausgesetzt werden kann.

Fig. 5 zeigt schließlich noch, wie der Fisch F in der Vorrichtung 1 gehalten und allseits zur äußeren Begrenzung der käfigartigen Struktur 2 beabstandet ist.

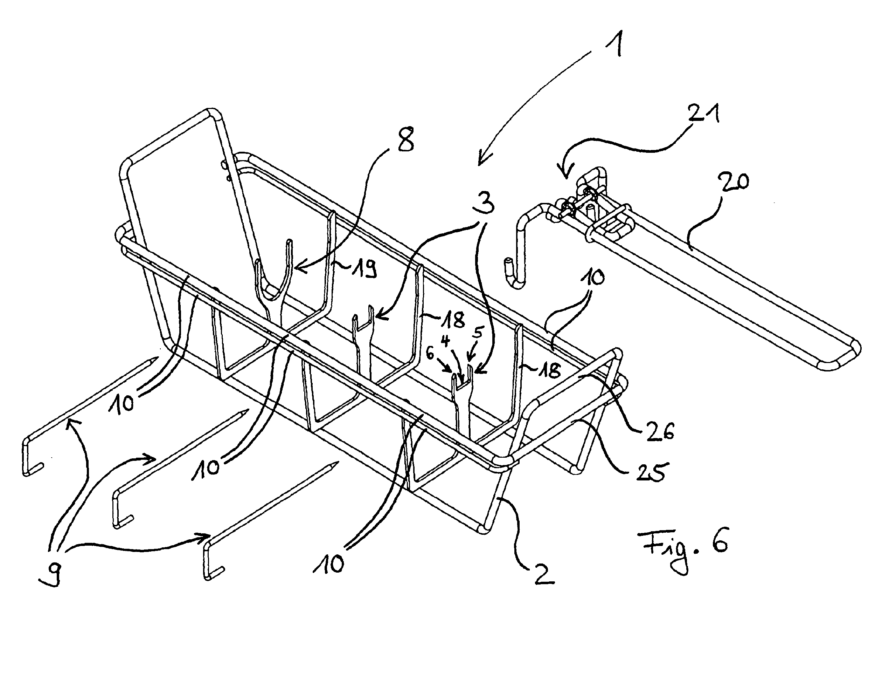

Die Fig. 6 - 8 zeigen drei weitere Ausführungsbeispiele der vorliegenden Erfindung, deren Unterschiede zum ersten Ausführungsbeispiel nachfolgend erläutert werden.

Die Vorrichtung 1 aus Fig. 6 entspricht in vielerlei Hinsicht der Vorrichtung gemäß dem bereits beschriebenen ersten Ausführungsbeispiel. Hier sind demgegenüber jedoch lediglich zwei doppelspießartige Halteelemente 3 vorgesehen, die als Teil eines bis an dies Außenseite der käfigartigen Struktur 2 reichenden Strukturelements nicht aus mehreren Drähten gelötet, sondern aus einem Edelstahlblech lasergeschnitten sind. Mithin sind die das doppelspießartige Halteelement 3 bildenden und quer zur Längsrichtung beabstandeten spitzen Enden 5, 6 zusammen mit dem darunter liegenden Quersteg in Art einer gabelartigen Struktur aus einem Blech geschnitten. Gleiches gilt im übrigen für das (die Schwanzflosse) stützende Halteelement 8, welches ebenfalls Teil eines aus einem Blech laser-geschnittenen Haltelements ist. Die die Querspieße 9 sichernden Führungselemente 10 sind vorliegend durch zwei horzontal verlaufende und vertikal beabstandete Strukturelemente der käfigartigen Struktur 2 gebildet, durch welche die Querspieße 9 hindurchgesteckt werden können. Ferner umfasst die Vorrichtung 1 aus Fig. 6 einen Griff 20, welcher mittels einer Sicherungseinrichtung 21 an den beiden Quertraversen 25, 26 der käfigartigen Struktur 2 befestigt und dort fixiert werden kann.

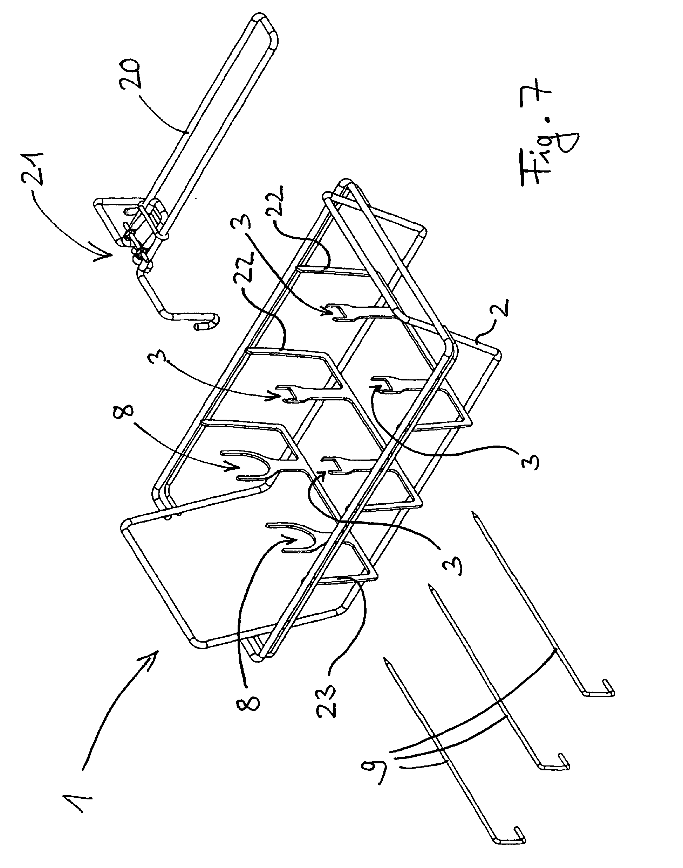

Das in Fig. 7 gezeigte dritte Ausführungsbeispiel einer erfindungsgemäßen Vorrichtung 1 unterscheidet sich von demjenigen aus Fig. 6 letztlich nur dadurch, dass es breiter ist und dass darin zwei Fische nebeneinander im erfindungsgemäßen Sinne gehalten werden können. Auch hier sind die doppelspießartigen Halteelemente 3 als Teil einer größeren Struktur 22 aus einem Edelstahlblech lasergeschnitten, wobei jede der Strukturen 22 zwei nebeneinander angeordnete Halteelemente 3 aufweist. Gleiches gilt für das Halteelement 8, von welchem ebenfalls zwei Stück nebeneinander aus einem Stück Edelstahlblech 23 geschnitten sind. Denkbar sind im übrigen auch erfindungsgemäße Vorrichtungen, in denen mehr als zwei (z.B. vier) Fische im erfindungsgemäßen Sinne nebeneinander gehalten werden, wobei ggfs. je zwei benachbarte Fische durch geeignete Gestaltung der Halteelemente auch antiparallel ausgerichtet sein können.

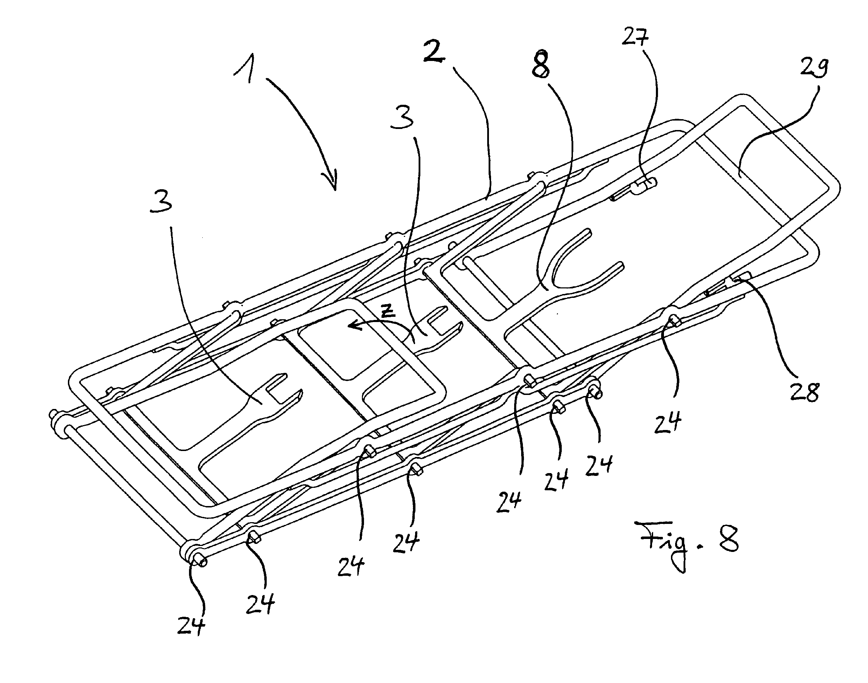

Zu guter Letzt zeigt Fig. 8 schließlich noch ein viertes Ausführungsbeispiel der vorliegenden Erfindung, welches im Wesentlichen der Variante aus Fig. 6 entspricht und - auf beiden Seiten der Vorrichtung 1 - um geeignete Gelenke 24 ergänzt wurde, mit denen die Vorrichtung 1 aus einer Gebrauchsstellung in die in Fig. 8 gezeigte Stellung zusammengeklappt und aus dieser Stellung - gemäß Pfeil Z - wieder zurück in eine Gebrauchsstellung zurückgeklappt werden kann. Die beiden Anschläge 27, 28 dienen dazu, in der Gebrauchstellung die Quertraverse 29 von unten zu stützen, wodurch ein selbsttätiges Zusammenklappen der Vorrichtung 1 in der Gebrauchsstellung wirksam verhindert wird.

## Patentansprüche

1. Vorrichtung (1) zum Grillen von Fischen (F) umfassend eine käfigartige Struktur (2) zum Ablegen der Vorrichtung auf einem Grillgerät oder auf einer sonstigen im wesentlichen ebenen Ablagefläche (E),
wobei die Vorrichtung (1) über ihre Länge eine Mehrzahl an Halteelementen (3) aufweist, auf welche der zu grillende Fisch (F) in Längsrichtung (L) mit seiner von unten offenen Bauchseite aufspießbar ist,
wobei jedes Halteelement (3) in Art eines Doppelspießes mit zwei quer zur Längsrichtung (L) beabstandeten spitzen Enden (5, 6) ausgebildet ist, zwischen denen das Rückgrat (7) des aufgespießten Fisches (F) aufgenommen wird, wobei jedes doppelspießartige Halteelement ferner einen unterhalb von dessen spitzen Enden (5, 6) verlaufenden Quersteg (4) umfasst, dem das Rückgrat (7) des aufgespießten Fisches (F) aufliegt, und
wobei die Vorrichtung (1) ferner eine Mehrzahl an separaten Querspießen (9) umfasst, die oberhalb des Rückgrats (7) des auf die Halteelemente (3) aufgespießten Fisches (F) quer durch dessen Körper gebohrt und in dieser Lage in ihnen zugeordneten Führungsmitteln (10) der käfigartigen Struktur (2) gehalten werden können.

2. Vorrichtung nach Anspruch 1,
**dadurch gekennzeichnet,**
**dass** die käfigartige Struktur (2) derart ausgebildet ist, dass die Vorrichtung (1) in verschiedenen Orientierungen auf einer Ablagefläche (E, G, H, I) abgelegt werden kann, wobei der Fisch (F) ausschließlich mit den Halteelementen (3) und den ihn durchbohrenden separaten Querspießen (9) in Kontakt ist und keinen Kontakt zur Ablagefläche (E, G, H, I) hat.

3. Vorrichtung nach Anspruch 2,
dass die verschiedenen Orientierungen, in welcher die Vorrichtung (1) auf einer Ablagefläche (E, G, H, I) abgelegt werden kann, einer Orientierung des in der Vorrichtung (1) bestimmungsgemäß gehaltenen Fisches (F) entsprechen, in welcher dieser mit seiner ersten Seitenflanke und/oder seiner zweiten Seitenflanke und/oder mit seiner Bauchseite und/oder mit seiner Rückenseite der Ablagefläche (E, G, H, I) zugewandt ist.

4. Vorrichtung nach Anspruch 1,
**dadurch gekennzeichnet,**
**dass** die Vorrichtung (1) genau zwei, drei oder vier doppelspießartige Halteelemente (3) umfasst.

5. Vorrichtung nach Anspruch 1,
**dadurch gekennzeichnet,**
**dass** die Vorrichtung (1) ein weiteres Halteelement (8) umfasst, welches zur unteren und seitlichen Stützung des bestimmungsgemäß in der Vorrichtung (1) gehaltenen Fisches (F) im Bereich seines Schwanzstiels geeignet gestaltet ist.

6. Vorrichtung nach Anspruch 1,
**dadurch gekennzeichnet,**
**dass** jedem doppelspießartigen Halteelement (3) genau ein separater Querspieß (9) und diesbezügliche Führungsmittel (10) an der käfigartigen Struktur (2) zugeordnet sind, wobei die Führungsmittel (10) so gestaltet und angeordnet sind, dass der in der Vorrichtung (1) bestimmungsgemäß gehaltene Fisch (F) von dem einem Halteelement (3) zugeordneten und in den Führungsmitteln (10) gehaltenen Querspieß (9) in unmittelbarer Nähe zu dem ihm zugeordneten Halteelement (3) durchquert wird.

7. Vorrichtung nach Anspruch 1,
**dadurch gekennzeichnet,**
**dass** die Führungsmittel (10) für die separaten Querspieße durch eine allseits berandete Öffnung gebildet sind, in welcher der jeweilige Querspieß (9) axial geführt ist.

8. Vorrichtung nach Anspruch 1,
**dadurch gekennzeichnet,**
**dass** die Vorrichtung (1) stapelbar gestaltet ist.

9. Vorrichtung nach Anspruch 1,
**dadurch gekennzeichnet,**
**dass** die käfigartige Struktur (2) eine Mehrzahl an Gelenken aufweist, mit denen die Vorrichtung (1) zusammengeklappt werden kann.

10. Vorrichtung nach Anspruch 1,
**dadurch gekennzeichnet,**
**dass** von der käfigartigen Struktur (2) wenigstens ein längliches Element (12) absteht, an welchem ein Griff (13) zum Greifen der Vorrichtung oder ein Adapter zum Einsetzen der Vorrichtung in eine Drehvorrichtung befestigbar oder ausgebildet ist.

## Claims

1. Device (1) for grilling fish (F), comprising a cage-like structure (2) for placing the device onto a grill unit or onto another essentially flat rest surface (E),
wherein the device (1) has a plurality of holding elements (3) over the length thereof, onto which holding elements the fish (F) to be grilled can be skewered in the longitudinal direction (L) with the belly side thereof, which is open underneath,
wherein each holding element (3) is formed as a double spike having two pointed ends (5, 6) which are spaced apart transversely to the longitudinal direction (L) and between which the spine (7) of the skewered fish (F) is held,
wherein each double-spike-like holding element furthermore comprises a crosspiece (4) which runs below the pointed ends (5, 6) of the said holding element, on which crosspiece the spine (7) of the skewered fish (F) lies, and
wherein the device (1) furthermore comprises a plurality of separate transverse spikes (9), which can be pushed transversely through the body of the fish (F) skewered onto the holding elements (3), above the spine (7) thereof, and can be held in this position in guide means (10) associated with the transverse spikes in the cage-like structure (2).

2. Device according to claim 1,
**characterised in that**
the cage-like structure (2) is formed in such a manner that the device (1) can be placed in different orientations on a rest surface (E, G, H, I),
wherein the fish (F) is only in contact with the holding elements (3) and the separate transverse spikes (9) piercing it and is not in contact with the rest surface (E, G, H, I).

3. Device according to claim 2,
**characterised in that**
the different orientations in which the device (1) can be placed on a rest surface (E, G, H, I) correspond to an orientation of the fish (F) held as intended in the device (1), in which orientation the fish faces the rest surface (E, G, H, I) with the first side flank and/or the second side flank and/or the belly side and/or the back thereof.

4. Device according to claim 1,
**characterised in that**
the device (1) comprises exactly two, three or four double-spike-like holding elements (3).

5. Device according to claim 1,
**characterised in that**
the device (1) comprises a further holding element (8), which is designed to be suitable for supporting the fish (F) held as intended in the device (1) in the region of the tail thereof underneath and at the sides.

6. Device according to claim 1,
**characterised in that**
each double-spike-like holding element (3) is associated with exactly one separate transverse spike (9) and guide means (10) associated therewith in the cage-like structure (2),
wherein the guide means (10) are designed and arranged in such a manner that the fish (F) held as intended in the device (1) is crossed by the transverse spike (9) which is associated with a holding element (3) and held in the guide means (10) in the direct vicinity of the holding element (3) associated therewith.

7. Device according to claim 1,
**characterised in that**
the guide means (10) for the separate transverse spikes are formed by an opening delimited on all sides, in which the respective transverse spike (9) is axially guided.

8. Device according to claim 1,
**characterised in that**
the device (1) is designed to be stackable.

9. Device according to claim 1,
**characterised in that**
the cage-like structure (2) has a plurality of articulations with which the device (1) can be folded up.

10. Device according to claim 1,
**characterised in that**
at least one elongate element (12) projects from the cage-like structure (2), on which elongate element a handle (13) for grasping the device or an adapter for inserting the device into a rotating device can be fastened or is formed.

## Revendications

1. Dispositif (1) pour faire griller des poissons (F), comprenant une structure du genre cage (2) permettant de poser le dispositif sur un appareil à grillades ou sur une autre surface de support quasiment plane (E), où le dispositif (1) comporte une pluralité d'éléments de maintien (3) répartis dans sa longueur, sur lesquels le poisson (F) à faire griller peut être embroché dans le sens longitudinal (L), par sa face ventrale ouverte par en-dessous,
où chaque élément de maintien (3) est conçu comme une double broche, avec deux extrémités pointues (5, 6) espacées transversalement au sens longitudinal (L), entre lesquelles est admise l'épine dorsale (7) du poisson (F) embroché,
où chaque élément de maintien du genre double broche comprend en outre une tige transversale (4) s'étendant en-dessous de ses extrémités pointues (5, 6), sur laquelle repose l'épine dorsale (7) du poisson (F) embroché, et
où le dispositif (1) comprend en outre une pluralité de broches transversales séparées (9), qui peuvent être enfoncées au-dessus de l'épine dorsale (7) du poisson (F) embroché sur les éléments de maintien (3), à travers le corps de celui-ci, et maintenues dans cette position dans des moyens de guidage (10) de la structure du genre cage (2) qui leur sont attribués.

2. Dispositif selon la revendication 1,
**caractérisé en ce que**
la structure du genre cage (2) est conçue de telle façon que le dispositif (1) peut être déposé selon différentes orientations sur une surface de support (E, G, H, I),
où le poisson (F) est en contact exclusivement avec les éléments de maintien (3) et les broches transversales séparées (9) qui le traversent, sans aucun contact avec la surface de support (E, G, H, I).

3. Dispositif selon la revendication 2,
**caractérisé en ce que**
les différentes orientations, dans lesquelles le dispositif (1) peut être déposé sur une surface de support (E, G, H, I), correspondent à une orientation du poisson (F) maintenu dans le dispositif (1) de façon conforme, dans laquelle celui-ci est tourné avec son premier flanc latéral et/ou son deuxième flanc latéral et/ou avec sa face ventrale et/ou avec sa face dorsale vers la surface de support (E, G, H, I).

4. Dispositif selon la revendication 1,
**caractérisé en ce que**
le dispositif (1) comprend exactement deux, trois ou quatre éléments de maintien du genre double broche (3)

5. Dispositif selon la revendication 1,
**caractérisé en ce que**
le dispositif (1) comprend un élément de maintien (8) supplémentaire, conçu de façon appropriée pour soutenir de façon conforme le poisson (F) maintenu dans le dispositif (1), par en-dessous et par le côté dans la région de sa queue.

6. Dispositif selon la revendication 1,
**caractérisé en ce que**
à chaque élément de maintien du genre double broche (3) sont attribués exactement une broche transversale séparée (9) et des moyens de guidage (10) associés sur la structure du genre cage (2), où les moyens de guidage (10) sont conçus et agencés de telle manière que le poisson (F) maintenu de façon conforme dans le dispositif (1) est traversé par la broche transversale (9) maintenue dans les moyens de guidage (10) et attribuée à un élément de maintien (3), à proximité immédiate de l'élément de maintien (3) qui lui est attribué.

7. Dispositif selon la revendication 1,
**caractérisé en ce que**
les moyens de guidage (10) pour la broche transversale séparée sont formés par une ouverture entièrement bordée, dans laquelle la broche transversale (9) respective est guidée axialement.

8. Dispositif selon la revendication 1,
**caractérisé en ce que**
le dispositif (1) est conçu de façon empilable.

9. Dispositif selon la revendication 1,
**caractérisé en ce que**
la structure du genre cage (2) comporte une pluralité d'articulations, avec lesquelles le dispositif (1) peut être plié.

10. Dispositif selon la revendication 1,
**caractérisé en ce que**
au moins un élément longitudinal (12) dépasse de la structure du genre cage (2), sur lequel est formé ou peut être fixé un manche (13) permettant de saisir le dispositif, ou alors un adaptateur permettant d'insérer le dispositif dans un dispositif rotatif.
